# EUROPÄISCHE PATENTSCHRIFT

(11) **EP 4 015 380 B1**
(45) Veröffentlichungstag und Bekanntmachung des Hinweises auf die Patenterteilung: **31.01.2024**
(21) Anmeldenummer: 21214994.2
(22) Anmeldetag: 16.12.2021
(51) Int. Cl.: B64D 11/00, B60N 2/00, B61D 17/04, B62D 33/04, B64D 11/06, E04B 2/74, B60N 2/30

(54) **MODULARES SYSTEM FÜR EINE LEICHTBAUWAND FÜR EIN FAHRZEUG**
MODULAR SYSTEM FOR A LIGHTWEIGHT WALL FOR A VEHICLE
SYSTÈME MODULAIRE POUR UNE PAROI DE CONSTRUCTION LÉGÈRE POUR UN VÉHICULE

(30) Priorität: 18.12.2020 DE 102020134173
(43) Veröffentlichungstag der Anmeldung: 22.06.2022
(73) Patentinhaber: Elbe Flugzeugwerke GmbH, 01109 Dresden (DE)
(72) Erfinder: Kehrer, Jens, 01109 Dresden (DE); Lang, Matthias, 01109 Dresden (DE); Müller, Sascha, 01109 Dresden (DE)
(74) Vertreter: LKGLOBAL Lorenz & Kopf Patentanwalt Attorney at Law PartG mbB

(56) Entgegenhaltungen:
- EP-A1- 3 173 331
- EP-A1- 3 330 180
- WO-A1-01/51387
- DE-U1- 20 202 176
- FR-A- 1 329 656
- FR-A- 1 418 028
- GB-A- 1 147 172

## Beschreibung

### TECHNISCHES GEBIET

Die vorliegende Offenbarung bezieht sich auf Leichtbauwände, insbesondere auf Leichtbautrennwände für Luft- und Raumfahrzeuge.

### TECHNISCHER HINTERGRUND

Das Gewicht von Luftfahrzeugen ist ein relevanter Parameter und hat einen hohen-Einfluss auf einige Flugeigenschaften und den Kraftstoffverbrauch. Insbesondere aus wirtschaftlicher und ökologischer Sicht ist es deshalb in der Luft- und Raumfahrt von großer Bedeutung, möglichst viele Komponenten in Leichtbauweise auszulegen und zu fertigen. Dies gilt sowohl für die Flugzeugkonstruktion an sich als auch für die Kabinenausstattung. In Flugzeugen, und auch anderen Fahrzeugen, werden Leichtbautrennwände verwendet, um verschiedene Bereiche des Flugzeugs, wie beispielsweise verschiedene Passagierklassen oder den Passagierbereich und einen Servicebereich voneinander abzutrennen.

Um die Leichtbauanforderungen zu erfüllen, werden solche Leichtbautrennwände üblicherweise in Sandwichbauweise mit Composite-Tragstrukturen gefertigt. Eine lastgerechte Anbindung von Anbauteilen, wie beispielsweise Flugbegleitersitzen, ist jedoch aufgrund der mechanischen Eigenschaften solcher Sandwich-Leichtbauwände im Allgemeinen schwierig. Für solche Strukturen mit hohen Beanspruchungen ergibt sich ein Leichtbaupotential bei gleichzeitiger Erfüllung der Belastungsanforderungen durch die Verwendung von hochfesten Metallen mit hoher Festigkeit und Steifigkeit bezogen auf die Dichte. Aufgrund des erforderlichen Know-How beim Anwenden der dazu nötigen Fügeprozesse werden solche Strukturen allerdings bisher kaum oder nicht verwendet.

Die FR 1 418 028 A beschreibt ein Pfosten- oder balkenförmiges Bauelement für den Zusammenbau von Gerüsten, Gestellen, Möbeln oder dergleichen sowie für die Errichtung und Verbindung von vorgefertigten Wandelementen oder Trennwänden. Das Bauelement weist einen Querschnitt mit rechteckigem Mantelumfang und einer C-förmigen Längsnut auf mindestens zwei gegenüberliegenden Seiten auf. Das Bauelement ist einerseits aus vier Winkelprofilstäben aus Metall und/oder Kunststoff gebildet, die parallel zueinander an den Eckpunkten des rechteckigen Mantelumfangs des Elements angeordnet sind, wobei die Öffnung des Winkels dem Inneren des Bauelements zugewandt ist und dazwischen Freiräume lässt, und andererseits durch Stege, die von mindestens einem der Schenkel jedes Winkels zum Inneren des Hüllumrisses des Bauelements hin verlaufen. Die genannten Teile sind so miteinander verbunden, dass einerseits die Stege zusammen in der Mittelachse des Bauelements einen zu den Profilen parallelen Schacht oder Kasten mit kreisförmigem oder polygonalem Querschnitt bilden, und dass andererseits jedes Stegpaar mit den beiden Winkelprofilen, von denen es ausgeht, auf einer der Außenseiten des Bauelements eine Längsnut mit C-förmigem Querschnitt bildet.

Die WO 01/51387 A1 beschreibt modulare Verpackungseinheit, die an die Abmessungen des zu verpackenden Produkts anpassbar, leicht und strukturell stabil ist, mit einer Vielzahl von Platten, die zur Bildung eines Verpackungsbehälters zusammengesetzt werden können, wobei jede Platte eine Abdeckfolie und ein Gerüst aus einem leichten metallischen Material zum Tragen der Abdeckfolie und zum Verbinden der Platten untereinander umfasst, wobei das Gerüst Stangen und Verbindungen aufweist, die zwischen den Stangen angeordnet und mit diesen durch umkehrbare Befestigungsmittel verbunden sind.

Die FR 1 329 656 A beschreibt ein Konstruktionsverfahren, das auf der Verwendung von rohrförmigen Elementen mit beliebigem Querschnitt wie Quadrat, Rechteck, Kreis, Ellipse beruht und darin besteht, diese rohrförmigen Elemente mit Hilfe von Verbindungsstücken wie gegossenen Teilen, Profilen, die innere Verbindungen bilden, miteinander zu verbinden und die mechanische Verbindung mit allen bekannten Mitteln herzustellen, die an das verwendete Material angepasst sind, wie Nieten, Nietbolzen, Bolzen und Muttern, Klebstoff.

Die GB 1 147 172 A beschreibt einen Fahrzeug- oder Containerkörper mit einem Rahmen, der aus Metallabschnitten besteht, die an ihren Enden durch Verbindungselemente miteinander verbunden sind, die so geformt sind, dass sie mit den Enden der Metallabschnitte zusammenpassen, und die aus Verbindungselementen, die eine Verbindung zwischen den Metallabschnitten herstellen, und aus Keilelementen bestehen, die die Verbindungselemente und die Metallabschnitte verkeilen und einen festen Schiebesitz zwischen ihnen sicherstellen.

Die DE 202 02 176 U1 ein Knotenpunktteil zum Verbinden von Elementen eines Bauwerks, insbesondere eines Ausstellungsstandes, eines Messestandes, oder dergleichen. Das Knotenpunktteil weist die Umrissform eines Würfels auf. Im Mittelbereich einer jeden Seitenfläche des Würfels und im Wesentlichen orthogonal zu dieser verlaufend ist eine Gewindebohrung vorgesehen. Die Gewindebohrung ist auf mindestens einem Teil ihrer Längserstreckung mit einem Gewinde versehen. Mindestens ein Teil der Seitenflächen ist im Bereich wenigstens einer Außenkante mit einem über die betreffende Seitenfläche vorstehenden, im Wesentlichen geradlinig verlaufenden Vorsprung versehen, welcher dazu ausgebildet ist, eine Verdrehung eines am Knotenpunktteil befestigten Elements relativ zu dieser Seitenfläche zu verhindern und welcher im Wesentlichen parallel zu der betreffenden Außenkante verläuft.

Die EP 3 330 180 A1 beschreibt einen Flugbegleitersitz, mit einem Rahmen, der an einer Trägerbefestigung montierbar oder in die Trägerbefestigung integriert ist, und mindestens einer in den Rahmen integrierten Sitzanordnung. Der Rahmen weist einen unteren Abschnitt, einen oberen Abschnitt und einen mittleren Abschnitt auf, der die mindestens eine Sitzanordnung zumindest teilweise aufnimmt, wobei der untere Abschnitt zumindest in einem an den mittleren Abschnitt angrenzenden Bereich gebogen ausgebildet ist. Es wird auch ein Verfahren zum Einbau eines Flugbegleitersitzes beschrieben.

### BESCHREIBUNG

Es kann deshalb als Aufgabe der Erfindung angesehen werden, ein flexibles Trennwandsystem für Fahrzeuge bereitzustellen, das eine lastgerechte Anbindung von Anbauteilen ermöglicht und einfach an vorgegebene Anforderungen angepasst werden kann.

Diese Aufgabe wird durch eine Leichtbautrennwand gemäß den unabhängigen Patentansprüchen gelöst. Weitere Ausführungsformen ergeben sich aus den abhängigen Ansprüchen sowie aus der folgenden Beschreibung.

Die Erfindung wird durch die Ansprüche definiert.

Gemäß einem ersten Aspekt umfasst eine Leichtbauwand für ein Fahrzeug ein Wandpanel, eine Vielzahl von Gerüststreben, eine Vielzahl von Verbindungsstücken und eine Tragstrukturstrebe. Jede Gerüststrebe weist ein erstes Ende und ein zweites Ende auf. Jedes Verbindungsstück weist mindestens zwei Anschlussstellen auf. Das erste Ende einer ersten Gerüststrebe ist mit einer Anschlussstelle eines ersten Verbindungsstücks verbunden und das zweite Ende der ersten Gerüststrebe ist mit einer Anschlussstelle eines zweiten Verbindungsstücks verbunden. Die Gerüststreben bilden zusammen mit den Verbindungsstücken ein Wandgerüst, wobei die Verbindungsstücke Knotenpunkten des Wandgerüsts entsprechen. Das Wandpanel ist in einer durch die Gerüststreben definierten Öffnung des Wandgerüsts angeordnet. Ein erstes Ende der Tragstrukturstrebe ist an einer weiteren Anschlussstelle des ersten oder des zweiten Verbindungsstücks befestigt. Ein zweites Ende der Tragstrukturstrebe ist konfiguriert, mit einer umgebenden Struktur verbunden zu werden. Die Leichtbauwand weist ferner eine Klappenvorrichtung mit einem Klapppanel, einem Schwenkmechanismus und einem Verriegelungsmechanismus auf. Das Klapppanel befindet sich in einer geschlossenen Position in einer durch die Gerüststreben definierten Öffnung. Der Verriegelungsmechanismus verbindet das Klapppanel in der geschlossenen Position lösbar mit einer umgebenden Struktur. Der Schwenkmechanismus verbindet das Klapppanel an einer Unterseite schwenkbar mit einer horizontalen Gerüststrebe der Vielzahl von Gerüststreben. Der Schwenkmechanismus ist konfiguriert, um dem Klapppanel ein Aufschwenken in eine offene Position zu ermöglichen. Der Schwenkmechanismus beinhaltet ein Viergelenk. Das Viergelenk ist mit einer ersten Seite an einer horizontalen Gerüststrebe befestigt. Das Viergelenk ist mit einer zweiten Seite an dem Klapppanel befestigt. Das Viergelenk ermöglicht ein gleichzeitiges Schwenken um zwei Drehachsen, die parallel zueinander verlaufen.

Bei den Gerüststreben handelt es sich dabei um langgestreckte Profile, die eine stabile Rahmenstruktur für die Leichtbauwand definieren, d.h. die einzelnen Gerüststreben treffen an Knotenpunkten aufeinander und bilden eine Art Gitter mit mehreren Öffnungen. Jede der Gerüststreben kann dabei eine horizontale oder eine vertikale Gerüststrebe sein und beispielsweise so angeordnet sein, dass die horizontalen Gerüststreben parallel zueinander verlaufen, die vertikalen Gerüststreben parallel zueinander verlaufen, und die horizontalen Gerüststreben und die vertikalen Gerüststreben in einem im Wesentlichen rechten Winkel, d.h. 90 Grad, aufeinandertreffen bzw. in einem solchen Winkel relativ zueinander angeordnet sind. Die Gerüststreben können aber auch in jedem anderen geeigneten Winkel mit Bezug zueinander verlaufen, so dass diese beispielsweise ein rautenförmiges Gitter oder jede andere, für eine Leichtbauwand geeignete und gewünschte, Rahmenstruktur bilden.

Die Gerüststreben können dabei jede geeignete Querschnittsform wie beispielsweise einen O-, U-, Z-, L-, T, Doppel-T oder einen Vierkant-Querschnitt aufweisen. Zudem können die Gerüststreben aus jedem geeigneten Material, wie beispielsweise aus verschiedenen isotropen metallischen Werkstoffen, gefertigt sein. Auch andere geeignete Materialien wie beispielsweise Faser-Kunststoff-Verbund-Bauteile (FKV-Bauteile) sind jedoch nicht ausgeschlossen.

Die Gerüststreben sind dabei an den Kreuzungs- oder Knotenpunkten des gebildeten Gitters über die Verbindungsstücke miteinander verbunden. Dazu weist jedes der Verbindungsstücke zwei oder mehr Verbindungsstellen auf, an denen jeweils Enden der Gerüststreben befestigt werden können, so dass die Verbindungsstücke die einzelnen Gerüststreben an den Knotenpunkten miteinander verbinden und so die Rahmenstruktur bilden. Beispielsweise kann ein Verbindungsstück, das an einer äußeren Ecke der Rahmenstruktur bzw. des Gerüsts angeordnet ist, zwei Anschlussstellen aufweisen, um so eine äußere horizontale Gerüststrebe und eine dazu quer verlaufende äußere vertikale Gerüststrebe miteinander zu verbinden. Ein Verbindungsstück, das an einem inneren Knotenpunkt angeordnet ist, kann beispielsweise vier Anschlussstellen aufweisen, um so beispielsweise zwei horizontale und zwei vertikale Gerüststreben in einer Art Kreuz miteinander zu verbinden.

Die Anschlussstellen der Verbindungsstücke entsprechen dabei Positionen an dem Verbindungsstück, die dazu vorgesehen sind, mit jeweils einem Ende einer Gerüststrebe verbunden zu werden, beispielsweise über eine kraftschlüssige, formschlüssige und/oder stoffschlüssige Verbindung. Ein Querschnitt einer Anschlussstelle der Verbindungsstücke ist dabei so ausgestaltet, dass er dem Querschnitt der damit zu verbindenden Gerüststrebe entspricht, so dass die Gerüststrebe damit verbunden werden kann. Bevorzugt weisen alle Anschlussstellen eines Verbindungsstücks die gleiche Querschnittsform auf. Es ist jedoch auch denkbar, dass verschiedene Anschlussstellen eines Verbindungsstücks verschiedene Querschnitte aufweisen, um so zu ermöglichen, dass Gerüststreben mit unterschiedlichen Querschnittsformen miteinander verbunden werden. Die Anschlussstellen eines Verbindungsstücks sind in Bezug zueinander so ausgerichtet, um den jeweils gewünschten Auftreffwinkel der einzelnen damit verbundenen Gerüststreben vorzugeben. Die Anschlussstellen sind beispielsweise als Vertiefungen oder Ausnehmungen in dem Verbindungsstück ausgestaltet, in welche die Gerüststreben eingeführt und darin fixiert werden können. Es kommt einer Vertiefung oder Ausnehmung funktional gleich, wenn die Anschlussstellen einen Bereich an der Oberfläche des Verbindungsstücks darstellen, der von einer Wand umgeben ist, welche aus der Oberfläche des Verbindungsstücks herausragt. Eine Gerüststrebe kann dann an dem Verbindungsstück so platziert werden, dass sie von der Wand umgeben und in Position gehalten wird.

Die Verbindungsstücke können ebenfalls in jeder geeigneten Art und aus jedem geeigneten Material hergestellt sein. So können die Verbindungsstücke beispielsweise aus verschiedenen isotropen metallischen Werkstoffen gefertigt sein. Auch andere Materialien sind jedoch nicht ausgeschlossen.

Die Gerüststreben können zudem in jeder geeigneten Art mit den Verbindungsstücken verbunden werden. Beispielsweise können die Gerüststreben mit den Anschlussstellen der Verbindungsstücke verschweißt, verklebt, verschraubt oder vernietet sein. Es sind jedoch auch andere Füge- oder Verbindungstechniken denkbar.

Jeweils vier Gerüststreben können die Öffnung definieren, in der das Wandpanel angeordnet ist. Es ist jedoch auch denkbar, dass mehr als vier oder weniger als vier Gerüststreben die Öffnung definieren. Beispielsweise können drei Gerüststreben eine dreieckförmige Öffnung definieren. Mit anderen Worten verlaufen die Gerüststreben also, wenn das Wandpanel eingesetzt ist, entlang des äußeren Umfangs des Wandpanels, so dass diese einen Rahmen wie beispielsweise bei einem Bilderrahmen definieren, in den das flächige Wandpanel eingesetzt ist.

Das Wandpanel kann in Leichtbauweise als Sandwichstruktur ausgeführt sein, um Leichtbauanforderungen zu erfüllen. Das Wandpanel kann also insbesondere zwei Deckschichten und eine zwischen den Deckschichten angeordnete Kernschicht aufweisen, und die Kernschicht kann eine im Vergleich zu den Deckschichten niedrigere Massendichte, d.h. ein niedrigeres Gewicht pro Volumen, aufweisen. Das Wandpanel kann aber auch aus anderen geeigneten Materialen, insbesondere auch nicht in Leichtbauweise, gefertigt sein.

Bei der Verwendung einer Sandwichbauweise kann die Kernschicht ein Wabenkern, ein Schaumstoffkern oder ein Kern aus anderen geeigneten Leichtbaustoffen, wie beispielsweise Kork, sein. Ein Schaumstoffkern kann beispielsweise aus PVC-Schaumstoff (Polyvinylchlorid-Schaumstoff), aus PET-Schaumstoff (Polyethylenterephthalat-Schaumstoff) oder aus jedem anderen geeigneten Material gefertigt sein.

Die Deckschichten hingegen können aus stabileren Materialien mit höherer Massendichte gebildet sein. Dazu kann jedes geeignet Material wie beispielsweise Holz, Kunststoffe oder verschiedene Laminate verwendet werden. Die Deckschichten könnten beispielsweise aus in Phenolharz getränktem Glasfasergewebe oder aus Kohlenstofffaser-Laminat gefertigt sein. Diese Aufzählung ist jedoch nur beispielhaft und andere Materialien sind ebenfalls denkbar.

Zudem können in den in dem Wandgerüst definierten Öffnungen auch andere, von dem Wandpanel abweichende, Bauteile, wie beispielsweise Flugbegleitersitze oder Klappenvorrichtungen, wie weiter unten beschrieben, angebracht sein.

Bei der Tragstrukturstrebe handelt es sich um eine Strebe, die dazu vorgesehen ist, die Leichtbauwand mit einer umgebenden Struktur, beispielsweise mit dem Rumpf eines Flugzeugs, zu verbinden. Dazu ist die Tragstrukturstrebe an einem ersten Ende, so wie die Gerüststreben, mit einer Anschlussstelle eines Verbindungsstücks verbunden. Das zweite Ende der Tragstrukturstrebe ist ausgeführt, um an der umgebenden Struktur befestigt zu werden und so die Leichtbauwand mit dem Fahrzeug zu verbinden. Die Tragstrukturstrebe kann ebenso wie die Gerüststreben aus jedem geeigneten Material und in jeder geeigneten Weise hergestellt sein und in jeder geeigneten Weise mit dem Verbindungsstück verbunden sein. Zudem können auch mehr als eine Tragstrukturstrebe verwendet sein, und auch in die durch diese Tragstrukturstreben definierten Öffnungen können Wandpanele oder andere Strukturen eingebracht sein.

Beispielsweise bei medizinischen Notfällen in Flugzeugen kann es nötig sein, eine Breite eines Durchgangs zu verbreitern, um einen Patiententransport mittels einer Krankentrage zu ermöglichen. Im Stand der Technik werden zu diesem Zweck üblicherweise ganze Wandpanele entfernt. Es besteht die Möglichkeit des Verlusts des entfernten Wandpanels.

Zur Vermeidung solcher Probleme kann eine Klappenvorrichtung anstelle eines Wandpanels in einer Öffnung des Wandgerüsts angeordnet sein, um ein einfaches Abklappen des Wandpanels zu ermöglichen. Insbesondere kann eine solche Klappenvorrichtung an einer Gangseite einer Leichtbautrennwand angeordnet sein. An der Außenseite, d.h. in einem eingebauten Zustand der Leichtbauwand an der dem Gang zugewandten Seite des Wandgerüsts, befindet sich dabei in der Öffnung, in der die Klappenvorrichtung angeordnet ist, keine vertikale Gerüststrebe.

Das Klapppanel ist dabei ein Wandpanel, das nicht fest mit dem Wandgerüst verbunden ist. Das Klapppanel kann, wie oben in Bezug auf die Wandpanele der Leichtbauwand beschrieben, in jeder geeigneten Weise und aus jedem geeigneten Material, also insbesondere auch als Sandwich-Element ausgeführt sein.

In geschlossenem Zustand befindet sich das Klapppanel wie ein reguläres Wandpanel in einer der in dem Wandgerüst definierten Öffnungen. Der Schwenkmechanismus verbindet das Wandpanel an der Unterseite so mit dem Wandgerüst, dass das Klapppanel aus der Ebene des Wandgerüst heraus und nach unten geschwenkt werden kann, um so die Öffnung, in der das Klapppanel in dem geschlossenen Zustand angeordnet ist, freizugeben, ohne das Klapppanel vollständig aus der Leichtbauwand entfernen zu müssen. Das Klapppanel kann dabei beispielsweise über einem zuvor beschriebenen Klappsitz angeordnet sein. Insbesondere kann der Schwenkmechanismus dann in jeder geeigneten Art so ausgeführt sein, dass das Klapppanel vor den Klappsitz geklappt werden kann und in der offenen Position parallel oder im Wesentlichen parallel vor der restlichen Leichtbauwand verläuft. Der Schwenkmechanismus kann beispielsweise ein weiter unten beschriebenes Viergelenk, aber auch jeder andere geeignete Gelenkmechanismus sein.

Der Verriegelungsmechanismus verbindet das Klapppanel in dem geschlossenen Zustand so mit dem Wandgerüst, dass es in der Öffnung fixiert ist, jedoch einfach gelöst werden kann. Der Verriegelungsmechanismus kann beispielsweise einen oder mehrere Klemmenmechanismen aufweisen, die sich im geschlossenen Zustand mit entsprechenden Schlössern in dem Wandgerüst verbinden und so das Klapppanel in der Öffnung fixieren, jedoch ein einfaches und schnelles Lösen, beispielsweise über entsprechende Verriegelungsschalter oder -griffe, ermöglichen. Beispielsweise können vier solcher Verriegelungsmechanismen an den Ecken des Klapppanels angeordnet sein. Es ist jedoch auch jede andere Anzahl an Verriegelungsmechanismen möglich.

Bei einem Viergelenk handelt es sich um ein Verbindungselement, das zwei Befestigungselemente und zwei dazwischen liegende längliche Verbindungsstücke aufweist, welche mit beiden Befestigungselementen jeweils drehbar verbunden sind. Eines der beiden Befestigungselemente kann dann an dem Klapppanel und das andere der beiden Befestigungselemente kann an der umgebenden Struktur, beispielsweise an dem Wandgerüst, so befestigt sein, dass die länglichen Verbindungsstücke ein problemloses Herausklappen des Klapppanels um eine im Wesentlichen elliptische Kurve ermöglichen. In geschlossener Position sind die Verbindungsstücke vor der Leichtbauwand angeordnet. Das Klapppanel kann dann, wenn der Verriegelungsmechanismus gelöst wird, über die beiden durch das Viergelenk definierten Drehachsen so aufschwenken, dass es in der vollständig geöffneten Position zu der restlichen Leichtbauwand beabstandet und im Wesentlichen parallel zu dieser nach unten hängt.

Gemäß einer Ausführungsform weist die Leichtbauwand ferner einen Klappsitz mit einem Sitzelement und einer Rückenlehne auf. Das Sitzelement befindet sich in einem eingeklappten Zustand parallel vor der Rückenlehne. In einem ausgeklappten Zustand verläuft das Sitzelement quer zu der Rückenlehne, um dadurch einen Sitz zu bilden. Die Rückenlehne ist über eine obere Rückenlehnenführung an mindestens einer der Vielzahl von Gerüststreben so befestigt, dass die Rückenlehne sich in dem eingeklappten Zustand in einer durch die Gerüststreben definierten Öffnung befindet. Das Sitzelement ist entlang einer Drehachse drehbar gelagert und das Sitzelement ist mit der Rückenlehne drehbar so verbunden, dass das Sitzelement, beim Ausklappen in die ausgeklappte Position, die Rückenlehne in eine in Bezug auf das Wandgerüst geneigte Position aus der Leichtbauwand herausführt.

Bei dem Klappsitz kann es sich beispielsweise um einen Flugbegleitersitz in einem Flugzeug handeln. Klappsitze für Flugzeuge sind im Stand der Technik bekannt. Allerdings sind bei den bekannten Sitzkonzepten die Sitze entweder als separate Baugruppen konzipiert, bei denen die Tragstruktur der Baugruppe fest mit der Trennwand, in die der Sitz integriert ist, verbunden ist, oder die Rückenlehne des Sitzes kann starr mit der Trennwandverbunden sein und im Wesentlichen parallel zu der Wand verlaufen. Der hier beschriebene Sitz zeichnet sich durch eine verbesserte Ergonomie aus.

Im Gegensatz dazu ist bei dem Klappsitz der vorliegenden Offenbarung die Rückenlehne gegenüber der Leichtbauwand beweglich, um so das Neigen der Rückenlehne gegenüber der Leichtbauwand, und damit eine ergonomischere Sitzposition, zu ermöglichen.

Bei der oberen Rückenlehnenführung handelt es sich dazu bevorzugt um zwei Befestigungselemente, die selbst fest an zwei parallel verlaufenden vertikalen Gerüststreben angebracht sind, der Rückenlehne in eingeschränktem Maße aber eine Bewegung sowohl aus der Ebene der Leichtbauwand heraus, als auch in vertikaler Richtung, d.h. Höhenrichtung, der Leichtbauwand ermöglicht. Es ist aber auch denkbar, dass nur eine Rückenlehnenführung oder mehr als zwei Rückenlehnenführungen verwendet werden, oder dass die Rückenlehnenführung(en) an einer horizontalen Gerüststrebe, wie beispielsweise einer über der Rückenlehne verlaufenden Gerüststrebe angebracht ist/sind. Eine solche Rückenlehnenführung kann das Bewegen einer Oberseite der Rückenlehne gegenüber der Leichtbauwand in einer vorgegebenen Trajektorie ermöglichen. Die Rückenlehnenführung kann beispielsweise auch an einem oder mehreren der oben beschriebenen Montagepunkte in den Verbindungsstücken befestigt sein.

In einer eingeklappten Position des Klappsitzes befindet sich die Rückenlehnen in einer Öffnungen in dem Wandgerüst, beispielsweise in einer Öffnung, die durch vier Gerüststreben (zwei horizontale und zwei vertikale Gerüststreben) definiert ist, und die Gerüststreben umschließen die Rückenlehne. An einer Unterseite der Rückenlehne, d.h. einer Seite, die in eingebautem Zustand der Leichtbauwand dem Boden zugeneigt ist, ist die Rückenlehne nicht direkt mit dem Wandgerüst verbunden, sondern mit dem Sitzelement.

Bei dem Sitzelement handelt es sich um ein im Wesentlichen flaches Element, das dazu vorgesehen ist, eine Sitzfläche für einen Benutzer zur Verfügung zu stellen. Eine Oberseite des Sitzelements stellt dabei eine Sitzfläche dar. Das Sitzelement ist bevorzugt an den gleichen vertikalen Gerüststreben, an denen auch die obere Rückenlehnenführung angebracht ist, in der Höhenrichtung von der Rückenlehnenführung nach unten versetzt beabstandet entlang der Drehachse drehbar gelagert. Das Sitzelement ist dadurch in Bezug auf das Wandgerüst drehbar bzw. klappbar an einer hinteren Kante mit dem Wandgerüst verbunden, so dass sich das Sitzelement in der eingeklappten Position des Sitzes in der Öffnung in dem Wandgerüst befindet und parallel oder im Wesentlichen parallel zu einer Oberflächenebene der Leichtbauwand und der Rückenlehne verläuft. In dem ausgeklappten Zustand verläuft das Sitzelement quer zu der Oberflächenebene, d.h. unter einem bestimmten Winkel zu der Ebene, die durch die Gerüststreben definiert wird, und auch zu einem unteren Ende der Rückenlehne.

Das Sitzelement ist zudem an einer Position, die sich in dem ausgeklappten Zustand vor der durch das Wandgerüst aufgespannten Ebene befindet, drehbar mit der Rückenlehne verbunden. Diese Verbindung zwischen Sitzelement und Rückenlehne definiert also eine Rotationsachse, die nicht ortsfest ist, sondern sich beim Ausklappen des Sitzelements mit der Bewegung des Sitzelements in einem Kreisbogen um die Drehachse bewegt. Mit anderen Worten befindet sich die Rotationsachse also in dem eingeklappten Zustand in der Ebene des Wandgerüsts und ist in der Höhenrichtung nahe der Drehachse zwischen der oberen Rückenlehnenführung und der Drehachse angeordnet. In dem ausgeklappten Zustand befindet sich die Rotationsachse vor der Ebene des Wandgerüsts. Dadurch wird beim Ausklappen des Sitzelements die Unterseite der Rückenlehne ebenfalls entlang eines Kreisbogens aus der Ebene des Wandgerüsts herausgeführt. Die obere Rückenlehnenführung ermöglicht der Oberseite der Rückenlehne dabei, wenn die Unterseite der Rückenlehne aus dem Wandgerüst herausgeführt wird, ebenfalls aus der Ebene des Wandgerüsts hervorzutreten, jedoch in einen kleineren Abstand vor die Ebene des Wandgerüsts, als die Unterseite. Dadurch wird die Rückenlehne aus der Ebene des Wandgerüsts herausgeführt und gegenüber dem Wandgerüst in einem bestimmten Winkel verkippt, so dass die Unterseite der Rückenlehne weiter vorsteht, als die Oberseite der Rückenlehne. Durch die geneigte Rückenlehne wird eine ergonomischere Sitzposition ermöglicht.

Gemäß einem zweiten Aspekt umfasst eine Leichtbauwand für ein Fahrzeug ein Wandpanel, eine Vielzahl von Gerüststreben, eine Vielzahl von Verbindungsstücken und eine Tragstrukturstrebe. Jede Gerüststrebe weist ein erstes Ende und ein zweites Ende auf. Jedes Verbindungsstück weist mindestens zwei Anschlussstellen auf. Das erste Ende einer ersten Gerüststrebe ist mit einer Anschlussstelle eines ersten Verbindungsstücks verbunden und das zweite Ende der ersten Gerüststrebe ist mit einer Anschlussstelle eines zweiten Verbindungsstücks verbunden. Die Gerüststreben bilden zusammen mit den Verbindungsstücken ein Wandgerüst, wobei die Verbindungsstücke Knotenpunkten des Wandgerüsts entsprechen. Das Wandpanel ist in einer durch die Gerüststreben definierten Öffnung des Wandgerüsts angeordnet. Ein erstes Ende der Tragstrukturstrebe ist an einer weiteren Anschlussstelle des ersten oder des zweiten Verbindungsstücks befestigt. Ein zweites Ende der Tragstrukturstrebe ist konfiguriert, mit einer umgebenden Struktur verbunden zu werden. Die Leichtbauwand weist ferner einen Klappsitz mit einem Sitzelement und einer Rückenlehne auf. Das Sitzelement befindet sich in einem eingeklappten Zustand parallel vor der Rückenlehne. In einem ausgeklappten Zustand verläuft das Sitzelement quer zu der Rückenlehne, um dadurch einen Sitz zu bilden. Die Rückenlehne ist über eine obere Rückenlehnenführung an mindestens einer der Vielzahl von Gerüststreben so befestigt, dass die Rückenlehne sich in dem eingeklappten Zustand in einer durch die Gerüststreben definierten Öffnung befindet. Das Sitzelement ist entlang einer Drehachse drehbar gelagert und das Sitzelement ist mit der Rückenlehne drehbar so verbunden, dass das Sitzelement, beim Ausklappen in die ausgeklappte Position, die Rückenlehne in eine in Bezug auf das Wandgerüst geneigte Position aus der Leichtbauwand herausführt.

Erläuterungen bezüglich des ersten Aspekts, welche mit dem zweiten Aspekt übereinstimmende Merkmale betreffen, werden hier der Kürze halber nicht wiederholt und gelten uneingeschränkt auch für den zweiten Aspekt. Ebenso werden oben beschriebene Erläuterungen zu dem Klappsitz hier nicht wiederholt.

Gemäß einer Ausführungsform sind die Verbindungsstücke aus einer ersten Halbschale und einer zweiten Halbschale gebildet, die entlang einer Verbindungslinie miteinander verbunden sind.

Die erste Halbschale und die zweite Halbschale entsprechen dabei ausgehöhlten, relativ dünnwandigen Teilelementen, deren äußere Kontur der Kontur des fertigen Verbindungsstücks entspricht, wenn die beiden Teilelemente entlang der Verbindungslinie aneinander anliegen.

Die erste und die zweite Halbschale können dabei mit jeder geeigneten Fügetechnik, wie beispielsweise, Schweißen oder Kleben, miteinander verbunden sein, um so einen geschlossenen Hohlkörper zu bilden. Auf diese Weise wird das Gewicht der Verbindungsstücke weiter reduziert, um Leichtbauanforderungen zu erfüllen.

Gemäß einer weiteren Ausführungsform weisen die Verbindungsstücke ferner Montagepunkte auf, die konfiguriert sind, an der Leichtbauwand zu befestigende Gegenstände aufzunehmen.

Bei den Montagepunkten kann es sich beispielsweise um Innengewinde oder Bohrlöcher handeln, an denen Gegenstände leicht befestigt werden können. Auch andere Montagemechanismen wie beispielsweise Klammermechanismen sind denkbar. Auf diese Weise ist es in einfacher Art und Weise möglich, an der Leichtbauwand anzubringende Gegenstände in einem definierten Abstand anzubringen. Die Verbindungsstücke stellen damit definierte Krafteinleitungspunkte dar.

Beispielsweise können Montagepunkte an zwei benachbarten Verbindungsstücken, die eine horizontale Gerüststrebe miteinander verbinden, dazu verwendet werden, um einen, wie weiter unten beschriebenen, Klappsitz bzw. Flugbegleitersitz an der Trennwand anzubringen, oder auch um Wandpanele an dem Wandgerüst zu befestigen.

Gemäß einer weiteren Ausführungsform weist die Rückenlehne an seitlichen Rändern Führungsstifte auf, die mit Führungsschienen der Rückenlehnenführung gleitend verbunden sind. Die Führungsschienen sind ausgeführt, um die Rückenlehne über die Führungsstifte kontinuierlich nach unten und aus der durch das Wandgerüst definierten Ebene heraus zu führen, wenn der Klappsitz in die ausgeklappte Position gebracht wird.

Eine solche Ausführung der oberen Rückenlehnenführung erlaubt das oben beschriebene Herausgleiten der Oberseite der Rückenlehne aus der Ebene des Wandgerüsts. Die Führungsstifte stehen dabei an der Oberseite der Rückenlehne seitlich von der Rückenlehne vor und sind gleitend mit entsprechenden Führungsschienen der oberen Rückenlehnenführung verbunden. Die Führungsschienen sind dabei so ausgeführt, um der Oberseite der Rückenlehne beim Ausklappen eine eingeschränkte Bewegung entlang einer gewünschten Trajektorie zu ermöglichen.

Gemäß einer weiteren Ausführungsform weist der Klappsitz ferner eine Rückstellvorrichtung und eine untere Gurtanbindung auf. Die Rückstellvorrichtung ist in der Drehachse angeordnet. Die Rückstellvorrichtung ist konfiguriert, um das Sitzelement von dem ausgeklappten Zustand in den eingeklappten Zustand zurück zu bringen, wenn keine externe Kraft auf das Sitzelement wirkt, welche das Sitzelement in dem ausgeklappten Zustand hält. Die Rückstellvorrichtung ist in die untere Gurtanbindung integriert. In einer Ausführungsform können die Rückstellvorrichtung und die untere Gurtanbindung ein gemeinsames Bauteil bilden.

Die Rückstellvorrichtung sorgt dafür, dass sich das Sitzelement selbständig wieder in den eingeklappten Zustand zurückbewegt, wenn keine Person auf dem Klappsitz sitzt. Die Rückstellvorrichtung kann dabei jede geeignete passive Komponente sein, die ein Drehmoment in die Drehachse einbringt, das groß genug ist, um das Sitzelement zurück in Richtung der Rückenlehne zu drehen. Insbesondere muss das durch die Rückstellvorrichtung eingebrachte Drehmoment also groß genug sein, um das durch die Gewichtskraft des Sitzelements und die Rückenlehne auf die Drehachse wirkende entgegengesetzte Drehmoment zu überwinden. Die Rückstellvorrichtung kann beispielsweise, wie weiter unten beschrieben, eine Torsionsfeder sein. Es ist jedoch auch jedes andere elastische Element denkbar, das ein rückstellendes Drehmoment in die Drehachse einbringt.

Die untere Gurtanbindung stellt untere Anbindungspunkte für einen Anschnallgurt zur Verfügung. Insbesondere kann die untere Gurtanbindung die beiden unteren seitlichen Anbindungspunkte für einen Vierpunktgurt, wie er in Flugzeugen für das Kabinenpersonal verwendet wird, zur Verfügung stellen. Im Stand der Technik sind die unteren Anbindungen für einen Gurt eines Flugbegleitersitzes üblicherweise nicht in der Drehachse angeordnet, sondern davon beabstandet weiter vorne an dem Sitzelement. Durch die Anordnung der unteren Gurtanbindung in der Drehachse und die Anordnung der Drehachse direkt an den Gerüststreben, d.h. an dem Wandgerüst, werden Kräfte, die über die Anschnallgurte eingebracht werden, unmittelbar auf das Wandgerüst übertragen, ohne zusätzliche Drehmomente über das Sitzelement oder auf das Sitzelement einzubringen. Dies sorgt zu einer Verbesserung des Komforts und der Sicherheit, da beispielsweise ruckartige Belastungen, z.B. bei Turbulenzen, Notlanden oder Ähnlichem, nicht dazu beitragen können, Momentlasten in das Sitzelement einzubringen. Dadurch kann im kritischen Lastfall eine Deformation des Sitzelements durch diese unnötigen Momentlasten vermieden oder verringert werden. Eine damit verbundene kritische Deformation der Gurtlaschen wird ebenfalls vermieden.

Gemäß einer weiteren Ausführungsform ist die Rückstellvorrichtung eine Torsionsfeder. Die Torsionsfeder ist an einer ersten Seite der Drehachse fest mit dem Wandgerüst verbunden, d.h. so mit dem Wandgerüst verbunden, dass die Torsionsfeder sich an der ersten Seite der Drehachse in Bezug auf das Wandgerüst nicht über die Drehachse drehen kann. An einer zweiten, der ersten Seite gegenüberliegenden, Seite der Drehachse ist die Torsionsfeder mit dem Sitzelement verbunden, um so beim Ausklappen des Klappsitzes in die ausgeklappte Position eine Spannung aufzunehmen. Die Torsionsfeder erzeugt über die aufgenommene Spannung eine Rückstellkraft, wenn der Klappsitz sich in dem ausgeklappten Zustand befindet, um so das Sitzelement in den eingeklappten Zustand zurück zu bringen.

Eine Torsionsfeder nimmt eine Spannung auf, wenn eine erste Seite der Torsionsfeder über die Längsachse als Drehachse gegenüber einer zweiten Seite der Torsionsfeder verdreht wird. Die eingebrachte Spannung sorgt dafür, dass die Torsionsfeder wieder in ihren Ausgangszustand, d.h. den unverdrehten Zustand oder einen weniger verdrehten Zustand, zurückstrebt, wenn keine oder eine zu geringe Kraft auf die erste Seite der Torsionsfeder wirkt.

Da die Torsionsfeder in die Drehachse integriert und eine Seite der Torsionsfeder mit dem Wandgerüst bzw. mit der entsprechenden Gerüststrebe verbunden ist, während die gegenüberliegende Seite der Torsionsfeder mit dem Sitzelement selbst gekoppelt ist, wird beim Herunterklappen des Sitzelements die mit dem Sitzelement verbundene Seite der Torsionsfeder gegenüber der mit dem Wandgerüst verbundenen Seite der Torsionsfeder verdreht. Dadurch nimmt die Torsionsfeder eine Spannung auf und kann das Sitzelement in die eingeklappte Position zurückbringen, wenn keine Person auf dem Sitzelement sitzt und keine andere externe Kraft auf das Sitzelement wirkt.

Gemäß einer weiteren Ausführungsform weist die Leichtbauwand ferner einen Gurtaufroller auf. Der Gurtaufroller ist in einer über der Rückenlehne angeordneten und quer zu denjenigen Gerüststreben, an denen der Klappsitz befestigt ist, verlaufenden Gerüststrebe untergebracht und befestigt.

Ein solcher Gurtaufroller stellt einen Anschnallgurt für den Klappsitz zur Verfügung. Der Gurtaufroller kann dabei in einer horizontalen Gerüststrebe des Wandgerüsts untergebracht sein, die selbst Teil des Wandgerüsts ist und über der Rückenlehne angeordnet ist. Zu diesem Zweck kann die entsprechende Gerüststrebe einen entsprechenden Querschnitt aufweisen, um den Gurtaufroller aufzunehmen. Der Gurtaufroller kann dabei je nach Anschnallkonzept unterschiedlich angeordnet sein. Bei einem Dreipunktgurt beispielsweise, wie er in Kraftfahrzeugen verwendet wird, kann sich der Gurtaufroller an einer Seite der horizontalen Gerüststrebe, oder auch in einer der vertikalen Gerüststreben, die seitlich an der Rückenlehne verlaufen, angeordnet sein. Es kann auch ein zweiter Gurtaufroller mit einem zweiten Gurt verwendet sein. Bevorzugt sind in einer über der Rückenlehne verlaufenden horizontalen Gerüststrebe zwei Gurtaufroller mit Gurten untergebracht, die sich zentral und beabstandet voneinander über dem Klappsitz befinden, um Gurte für ein Vierpunkt-Anschnallkonzept, wie es in Flugzeugen verwendet wird, zur Verfügung zu stellen.

Da die Gurtaufroller in den Gerüststreben angeordnet sind, wird eine eventuell auf die Gurte aufgebrachte Last auch über die Gurtaufroller, wie über die untere Gurtanbindung, direkt in das Wandgerüst eingebracht und dadurch vorteilhaft aufgenommen.

Zusammenfassend wird durch die Erfindung also ein modulares Leichtbauwandkonzept für Fahrzeuge, insbesondere für Luft- und Raumfahrzeuge, zur Verfügung gestellt, das eine lastgerechte Anbindung von Anbauteilen wie Klappsitzen ermöglicht. Die Leichtbauwand kann über standardisierte Verbindungsteile und Gerüststreben einfach vormontiert werden, um dann in einem Fahrzeug verbaut zu werden. Dadurch können beispielsweise Schweißarbeiten an der Leichtbauwand in einem Flugzeugrumpf vermieden werden. Ein offenbarter Klappsitz in Verbindung mit einer solchen Leichtbauwand ist zudem platzsparend und ermöglicht ein ergonomisches Sitzen einer Person. Das offenbarte Anschnallkonzept ermöglicht zudem eine vorteilhafte Aufnahme von Lasten, beispielsweise bei Turbulenzen in Flugzeugen oder beim Notlanden, und kann die Sicherheit und den Komfort einer Person verbessern.

### KURZBESCHREIBUNG DER FIGUREN

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- **Fig. 1**: Eine schematische Darstellung eines Verbindungsstücks gemäß einer beispielhaften Ausführungsform.
- **Fig. 2**: Eine schematische Darstellung eines Wandgerüsts mit einem Verbindungsstück gemäß einer beispielhaften Ausführungsform.
- **Fig. 3**: Eine schematische Darstellung eines in eine Leichtbautrennwand integrierten Klappsitzes gemäß einer beispielhaften Ausführungsform.
- **Fig. 4**: Eine schematische Darstellung eines Gurtaufrollhalters für zwei Gurtaufroller für einen Vierpunktgurt gemäß einer beispielhaften Ausführungsform.
- **Fig. 5**: Eine schematische Darstellung einer Torsionsfeder als Rückstellvorrichtung für einen Klappsitz gemäß einer beispielhaften Ausführungsform.
- **Fig. 6**: Eine schematische Querschnittsdarstellung der Torsionsfeder aus Fig. 5 gemäß einer beispielhaften Ausführungsform.
- **Fig. 7**: Eine schematische Darstellung einer Klappenvorrichtung während des Öffnungsvorgangs gemäß einer beispielhaften Ausführungsform.
- **Fig. 8**: Eine schematische Darstellung einer Klappenvorrichtung in einer vollständig geöffneten Position gemäß einer beispielhaften Ausführungsform.

### DETAILLIERTE BESCHREIBUNG VON AUSFÜHRUNGSFORMEN

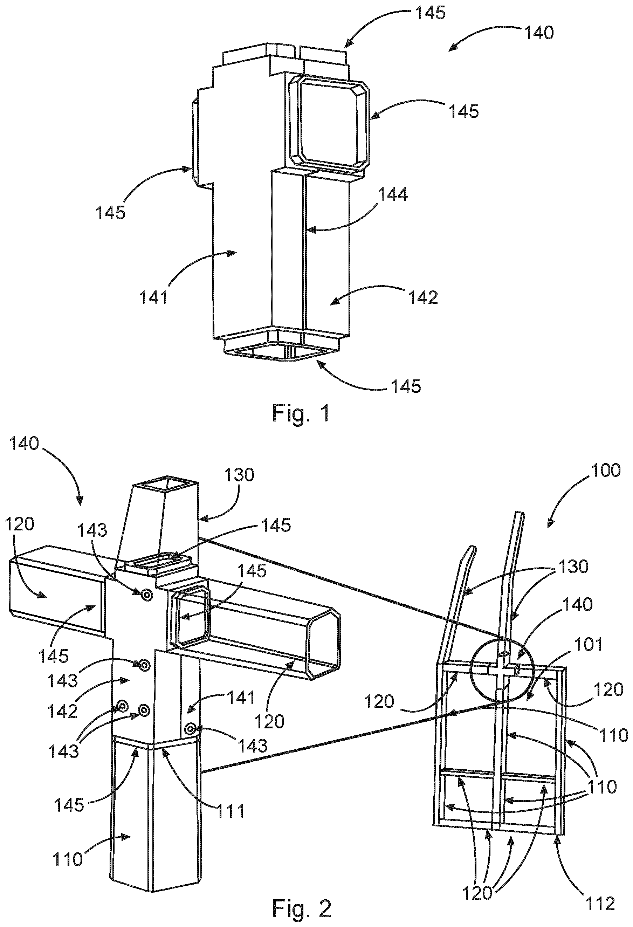

Fig. 1 zeigt ein Verbindungsstück 140 zum Verbinden mehrerer Gerüststreben 110, 120 (siehe Fig. 2) eines Wandgerüsts 100 (siehe Fig. 2) gemäß einer beispielhaften Ausführungsform. Das Verbindungsstück 140 weist eine erste Halbschale 141 und eine zweite Halbschale 142 auf. Die erste Halbschale 141 und die zweite Halbschale 142 sind entlang einer Verbindungslinie 144 miteinander verbunden und bilden zusammen das Verbindungsstück 140. Das Verbindungsstück 140 weist vier Anschlussstellen 145 auf, die konfiguriert sind, um mit Gerüststreben 110, 120 (siehe Fig. 2) oder mit Tragstrukturstreben 130 (siehe Fig. 2) verbunden zu werden.

Die erste Halbschale 141 und die zweite Halbschale 142 sind ausgehöhlte, relativ dünnwandige Elemente, die jeweils einer Hälfte des Verbindungsstücks 140 entsprechen. Zusammen bilden die beiden Halbschalen 141, 142 das fertige Verbindungsstück 140 als Hohlkörper, um das Gewicht zu reduzieren.

Die Anschlussstellen sind in diesem Beispiel als Vierkant-Querschnitt ausgelegt, um mit entsprechenden Gerüststreben 110, 120 verbunden zu werden, wie weiter unten mit Bezug auf Fig. 2 beschrieben wird. Die vier Anschlussstellen 145 sind kreuzförmig zueinander angeordnet, so dass das Verbindungsstück verwendet werden kann, um vier Gerüststreben 110, 120 kreuzförmig miteinander zu verbinden. Es sind jedoch je nach Anforderungen auch andere Anordnungen, Ausrichtungen und eine andere Anzahl der Anschlussstellen 145 möglich. Beispielsweise können die Anschlussstellen 145 auch unter einem Winkel zu dem Hauptkörper des Verbindungsstücks 140 ausgeführt sein, um so beispielsweise eine Verbindung von Tragstrukturstreben 130 aus der Ebene eines Wandgerüsts 100 heraus zu ermöglichen.

Die beiden Halbschalen 141, 142 können beispielsweise miteinander entlang der Verbindungslinie 144 mit einem geeigneten Klebstoff verklebt sein, oder miteinander verschweißt sein.

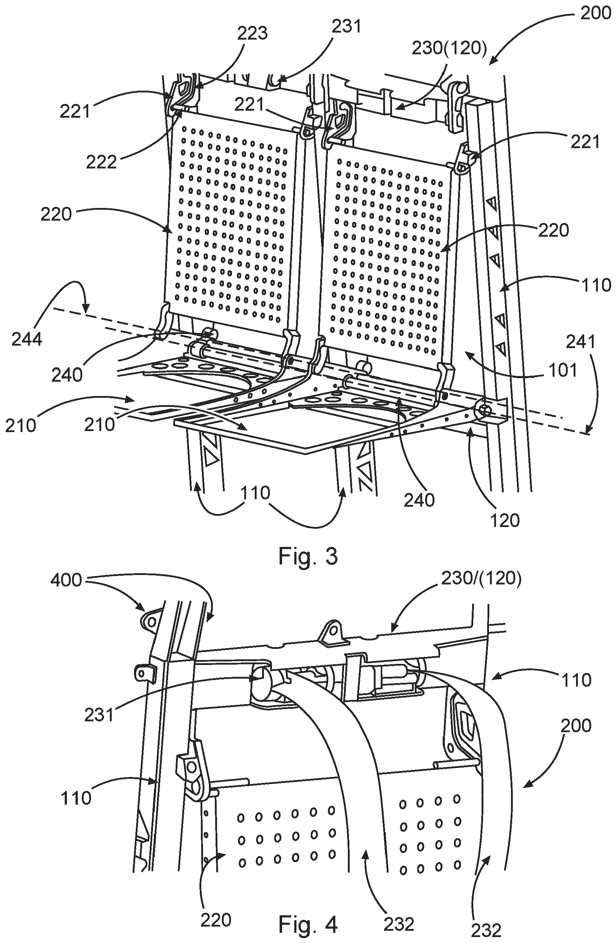

Fig. 2 zeigt ein Wandgerüst 100 (rechter Teil der Figur) mit einem verbauten Verbindungsstück 140 aus Fig. 1 gemäß einer beispielhaften Ausführungsform. Ein Ausschnitt (linker Teil der Figur) zeigt eine vergrößerte Darstellung des Verbindungsstücks 140 in der dargestellten Einbauposition. Das Verbindungsstück 140 weist in dieser Darstellung zusätzlich Montagepunkte 143 auf, die verwendet werden können, um Gegenstände wie beispielsweise die oberen Rückenlehnenführungen 221 (Fig. 3) eines Klappsitzes 200 (Fig. 3) anzubringen. Das Wandgerüst weist sechs horizontale Gerüststreben 120 und sechs vertikale Gerüststreben 110 auf. Die horizontalen Gerüststreben 120 verlaufen jeweils parallel zueinander und die vertikalen Gerüststreben 110 verlaufen jeweils parallel zueinander. Jeweils zwei horizontale Gerüststreben 120 und zwei vertikale Gerüststreben 110 definieren eine Öffnung 101. Zudem sind zwei Tragstrukturstreben 130 an der Oberseite des Wandgerüsts 100 verbunden. Jeder Knotenpunkt, d.h. jede Ecke der vier dargestellten Öffnungen 101, kann ein Verbindungsstück 140 aufweisen, das die einzelnen Gerüststreben 110, 120 miteinander verbindet, obwohl nur ein Verbindungsstück 140 explizit dargestellt ist. Die Tragstrukturstreben 130 sind ebenfalls an Verbindungsstücken 140 angebracht.

Auch in dieser Darstellung weisen die Anschlussstellen 145 der Verbindungsstücke 140 einen Vierkant-Querschnitt auf. Die Gerüststreben 110, 120 und die Tragstrukturstreben 130 weisen einen entsprechenden Querschnitt auf und Innenabmessungen der Gerüststreben 110, 120 und der Tragstrukturstreben 130 an dem Verbindungsstück 140 entsprechen den Außenabmessungen eines Vorsprungs an den Verbindungsstellen, so dass die Gerüststreben 110, 120 und die Tragstrukturstreben über die Anschlussstellen 145 gesteckt und wie oben beschrieben an diesen befestigt werden können.

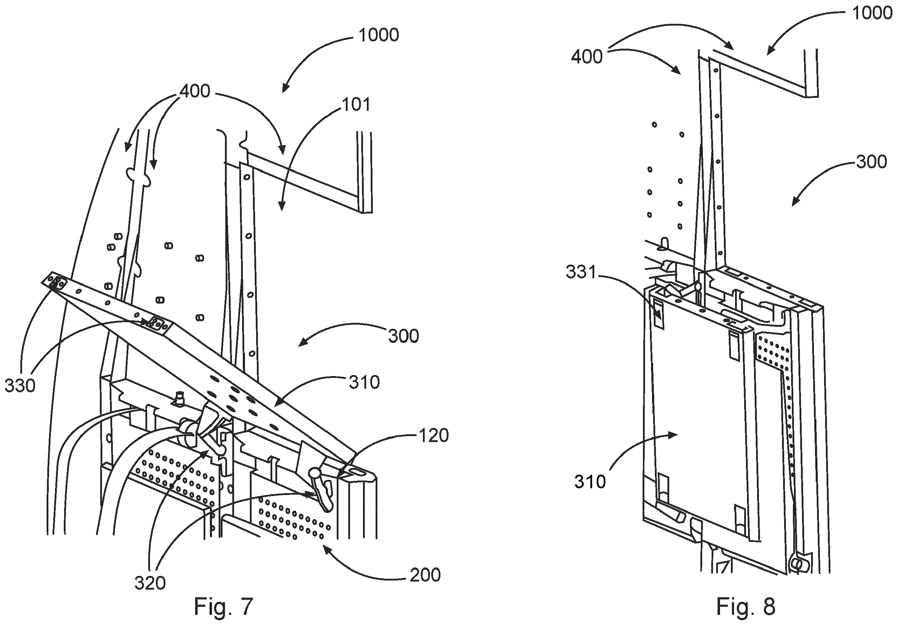

In den vier definierten Öffnungen 101 können beispielsweise Wandpanele 400 (Fig. 7) oder Klappsitze 200 (Fig. 3) eingebracht und befestigt werden, um so die Leichtbauwand 1000 (Fig. 7 und 8) zu bilden.

Fig. 3 zeigt zwei Klappsitze 200 gemäß einer beispielhaften Ausführungsform. Die Klappsitze 200 weisen jeweils ein Sitzelement 210 und eine Rückenlehne 220 auf. Die Rückenlehnen 220 sind jeweils über zwei obere Rückenlehnenführungen 221 an zwei benachbarten und parallel verlaufenden vertikalen Gerüststreben 110 angebracht. Die Rückenlehnenführungen 221 sind dazu an der Oberseite der Rückenlehnen 220 angeordnet und fest mit den entsprechenden vertikalen Gerüststreben 110 verbunden. Die beiden vertikalen Gerüststreben 110, sowie eine horizontale Gerüststrebe 120, welche, wie weiter unten mit Bezug auf Fig. 4 beschrieben, als Gurtaufrollhalter 230 ausgeführt ist, und eine horizontale Gerüststrebe 120, die unter dem Sitzelement angeordnet ist, definieren jeweils eine der zuvor beschriebenen Öffnungen 101, in dem Wandgerüst. Jeder der Klappsitze 200 ist in einer Öffnung 101 angeordnet.

Jede Rückenlehnenführung 221 weist eine Führungsschiene 223 auf, die ausgeführt ist, um einen entsprechenden Führungsstift 222, der an der Oberkante der Rückenlehne 220 seitlich vorstehend angeordnet ist, gleitend aufzunehmen. Die Führungsschienen 223 sind so geformt, dass sie den Führungsstiften 222, und damit auch der Oberkante der Rückenlehne 220, ermöglichen, sich von einer unteren äußeren Position in eine obere innere Position zu verschieben.

Die Sitzelemente 210 sind vertikal beabstandet unter den Rückenlehnen 220 drehbar entlang einer Drehachse 241 mit den vertikalen Gerüststreben 110 verbunden, so dass die Sitzelemente 210 über die Drehachse 241 zwischen einer eingeklappten Position und einer ausgeklappten Position hin und her klappbar sind. In der (nicht dargestellten) eingeklappten Position befinden sich die Sitzelemente 210 zusammen mit den Rückenlehnen 220 in den jeweiligen Öffnungen 101 und verlaufen parallel zu den Rückenlehnen 220. In der dargestellten ausgeklappten Position stehen die Sitzelemente 210 flächig in einem bestimmten Winkel von der durch die horizontalen Gerüststreben 120 und die vertikalen Gerüststreben 110 gebildeten Ebene so vor, um eine Sitzfläche bereitzustellen.

In die Drehachse 241 ist jeweils eine Rückstellvorrichtung 240 integriert, die beim Ausklappen der Sitzelemente 210 in die ausgeklappte Position eine Vorspannung aufnimmt, die dafür sorgt, dass die Sitzelemente 210 automatisch in die eingeklappte Position zurückgebracht werden, wenn keine Kraft auf die durch die jeweiligen Sitzelemente 210 definierte Sitzfläche nach unten wirkt. Die Rückstellvorrichtungen 240 bringen dabei zumindest ein Drehmoment auf, welches das durch die Gewichtskraft des jeweiligen Sitzelements 210 und die Gewichtskraft der jeweiligen Rückenlehne 220 entstehende Drehmoment in der Drehachse 241 übersteigt und diesem entgegengerichtet ist. In dem Beispiel der Figur 3 ist die Rückstellvorrichtung 240 eine Torsionsfeder 243, die an einer Seite fest mit einer der vertikalen Gerüststreben 110 verbunden ist, und die an der anderen Seite fest mit dem Sitzelement 210 verbunden ist. Auf diese Weise wird die Torsionsfeder 243 beim Ausklappen des Sitzelements 210 in die ausgeklappte Position entlang der Drehachse 241 verdreht und strebt in ihre Ausgangslage zurück, wenn keine Kraft wirkt, die groß genug ist, um die Torsionsfeder 243 in der verdrehten Lage zu halten.

Es kann jedoch anstelle einer Torsionsfeder 243 auch jede andere geeignete Rückstellvorrichtung verwendet werden.

Die Sitzelemente 210 und die Rückenlehnen 220 sind in dem dargestellten Beispiel zudem jeweils über zwei Verbindungsstücke entlang einer Rotationsachse 244 drehbar miteinander verbunden. Die Rotationsachsen 244 sind dabei ortsfest mit Bezug auf die Sitzelemente 210, jedoch nicht zu dem Wandgerüst 100 (Fig. 2). In dem ausgeklappten Zustand sind die Rotationsachsen 244 jeweils in Bezug auf die durch die Gerüststreben 110, 120 definierte Ebene vor der Drehachse 241, d.h. weiter von der Ebene entfernt, als die Rotationsachse 241, angeordnet. Die Rotationsachsen 244 drehen sich beim Einklappen des Sitzelements jeweils in einem Kreisbogen um die Drehachse 241 in die jeweilige Öffnung 101 hinein. Dadurch führen die Sitzelemente 210 das untere Ende der Rückenlehnen 220 mit in die Öffnung 101 hinein und das obere Ende der Rückenlehnen 220 gleitet jeweils entlang den Führungsschienen 223 nach oben und hinten in die Öffnung 101 hinein. Die Rotationsachsen 244 sind dabei in dem vollständig ausgeklappten Zustand in senkrechter Richtung weiter von der Ebene des Wandgerüsts 100 entfernt als die Führungsstifte 222. Mit anderen Worten sind in dem vollständig ausgeklappten Zustand die unteren Enden der Rückenlehnen 220 in senkrechter Richtung weiter von dem Wandgerüst 100 entfernt, als die oberen Enden, um so eine geneigte Position der Rückenlehnen 220 bereitzustellen. In dem vollständig eingeklappten Zustand befinden sich sowohl die Rückenlehnen 220 als auch die Sitzelemente 210 im Wesentlichen in der durch das Wandgerüst 100 definierten Ebene und verlaufen parallel zueinander.

Fig. 4 zeigt eine schematische Darstellung eines Gurtaufrollhalters 230 für zwei Gurtaufroller 231 gemäß einer beispielhaften Ausführungsform. Ein solcher Gurtaufrollhalter 230 kann beispielsweise für einen Standard-Vierpunktgurt, wie er in der Luftfahrt verwendet wird, verwendet werden. Der Gurtaufrollhalter 230 ist in einer horizontalen Gerüststrebe 120, die über der Rückenlehne 220 eines Klappsitzes 200 zwischen den beiden vertikalen Gerüststreben 110, an denen der Klappsitz 200 angebracht ist, integriert. Die horizontale Gerüststrebe 120 bzw. der Gurtaufrollhalter 230 weist dazu ein im Inneren so ausgehöhltes Querprofil auf, dass zwei Gurtaufroller 231 darin aufgenommen werden. Die Gurtaufroller stellen jeweils einen Gurt 232 zum Anschnallen einer Person bereit.

Die Gurtaufroller sind dabei so in gleichem Abstand von einer Mitte der Rückenlehne 220 seitlich beabstandet angeordnet, dass jeder der Gurte über eine Schulter einer Person geführt werden kann. Es ist jedoch auch denkbar, nur einen Gurtaufroller 231 an einer Seite der horizontalen Gerüststrebe 120 zu verwenden, um dadurch einen Standard-Dreipunktgurt, wie er in Kraftfahrzeugen verwendet wird, zur Verfügung zu stellen. Dadurch, dass die Gurtaufroller in dieser Weise in die horizontale Gerüststrebe 120 integriert sind, kann eine Last durch die Gurte 232 direkt durch das Wandgerüst 100 (Fig. 1) vorteilhaft aufgenommen werden, ohne ungewünschte Drehmomente einzubringen und ohne Lasten ungewünscht umzuleiten.

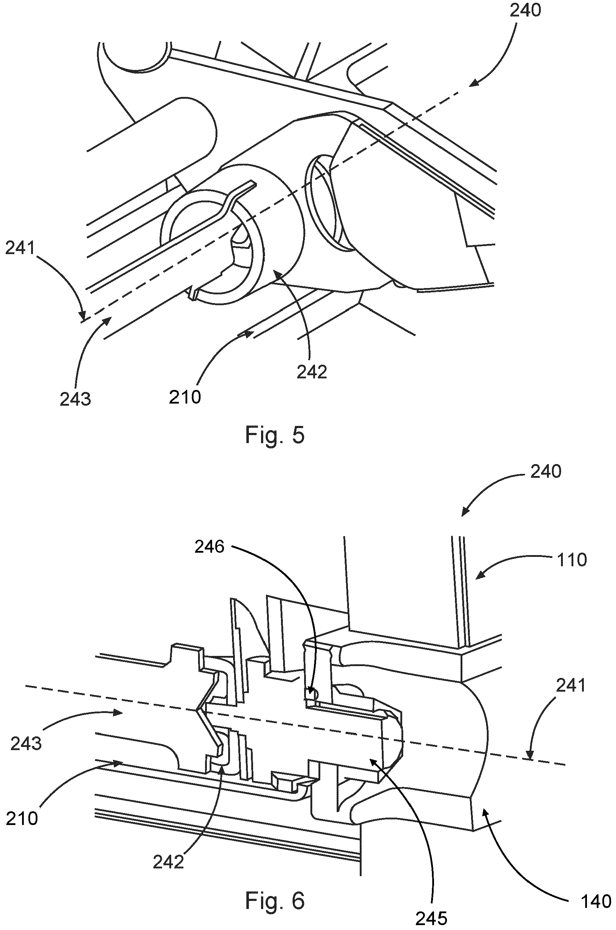

Die Fig. 5 und 6 zeigen eine schematische Darstellung einer Rückstellvorrichtung 240 gemäß einer beispielhaften Ausführungsform. Die Fig. 5 ist dabei eine perspektivische Ansicht der Rückstellvorrichtung 240. Die Fig. 6 stellt die Rückstellvorrichtung 240 in einer Querschnittsansicht dar. Dabei ist jeweils die an dem Wandgerüst 100 befestigte Seite der Rückstellvorrichtung 240 dargestellt. An der (nicht dargestellten) anderen Seite der Rückstellvorrichtung 240 ist diese fest mit dem Sitzelement 210 verbunden. In diesem Beispiel wird eine Torsionsfeder 243 als Rückstellvorrichtung verwendet. Dabei ist ein Topf 242 über einen Befestigungsbolzen 245 fest mit dem Wandgerüst 100 verbunden. Der Befestigungsbolzen 245 ist dabei an einem Befestigungselement 140 des Wandgerüsts 100, das entsprechend ausgestaltet ist, nicht drehbar angebracht und reicht durch eine Seitenwand des Sitzelements 210 hindurch. Der Befestigungsbolzen 245 und der Topf 242 drehen sich also nicht mit, wenn das Sitzelement 210 ausgeklappt wird, sondern bleiben in Bezug auf das Wandgerüst 100 in einer unveränderten Position. Eine Vorspannhilfe 246 ist durch eine Nut an dem Befestigungsbolzen 245 befestigt und kann durch einen 2-Kant-Ansatz so verdreht werden, um die Winkelposition des Topfs 242 um die Drehachse 241 und damit eine Vorspannung der Torsionsfeder 243 einzustellen. Die Torsionsfeder 243 ist an einer Seite an dem Topf 242 befestigt. An der anderen (nicht dargestellten) Seite der Torsionsfeder 243 ist diese fest mit dem Sitzelement 210, beispielsweise ebenfalls an einer Seitenwand des Sitzelements 210, verbunden. Die mit dem Sitzelement 210 verbundene Seite der Torsionsfeder 243 dreht sich also beim Ausklappen des Sitzelements 210 mit, während die andere Seite sich gegenüber dem Wandgerüst 100 nicht dreht. Dadurch wird die Torsionsfeder 243 beim Ausklappen des Sitzelements 210 verdreht und nimmt eine Spannung auf. Wenn also keine, oder eine zu geringe Kraft auf das Sitzelement 210 wirkt, also insbesondere, wenn keine Person auf dem Klappsitz 200 (nicht dargestellt) sitzt, strebt die Torsionsfeder 243 in den unverdrehten und damit ungespannten Zustand zurück und führt dadurch das Sitzelement 210 in die eingeklappte Position zurück.

Fig. 7 zeigt eine Klappenvorrichtung 300 gemäß einer beispielhaften Ausführungsform in einer halboffenen Stellung. Die Klappenvorrichtung 300 ist in diesem Beispiel in einer Leichtbauwand 1000 über einem zuvor beschriebenen Klappsitz 200 angeordnet. Eine solche Klappenvorrichtung 300 kann beispielsweise verwendet werden, um in Flugzeugen einen Korridor zum Transport einer Krankentrage oder allgemein von Gegenständen, die breiter sind als der von den Seitenwänden definierte Durchgang, bereitzustellen. Die Klappenvorrichtung 300 umfasst ein Klapppanel 310. Das Klapppanel 310 ist in diesem Beispiel über zwei Viergelenke 320, die als Schwenkmechanismus 320 dienen, aufschwenkbar an einer horizontalen Gerüststrebe 120 angebracht. Das Klapppanel 310 weist zudem vier Verriegelungsmechanismen 330 auf (nur zwei dargestellt, die anderen beiden sind in Fig. 8 sichtbar), welche das Klapppanel 310 mit der umgebenden Struktur verriegeln kann.

Die beiden Viergelenke 320 sind dabei an einem linken Rand und an einem rechten Rand des Klapppanels 310 angeordnet. Die Viergelenke 320 weisen zwei Befestigungselemente und ein dazwischenliegendes längliches Verbindungsstück auf, das an jedem der beiden Befestigungselemente drehbar gelagert ist. Eines der beiden Befestigungselemente jedes Viergelenks 320 ist an dem Klapppanel 310 befestigt. Das andere Befestigungselement jedes Viergelenks 320 ist an der horizontalen Gerüststrebe 120 befestigt. Das Klapppanel 310 kann so simultan um zwei Drehachsen schwenken, wobei eine der beiden Drehachsen selbst über das längliche Verbindungsstück in einem Kreisbogen um die andere Drehachse schwenken kann. Dadurch kann das Klapppanel 310 aus einer Öffnung 101, in der das Klapppanel 310 im vollständig geschlossenen Zustand angeordnet ist, herausgeklappt oder geschwenkt werden.

Die Verriegelungsmechanismen 330 können durch jeden geeigneten Mechanismus bereitgestellt werden, der dazu verwendet werden kann, um das Klapppanel 330 im geschlossenen Zustand mit der umgebenden Struktur (beispielsweise umgebende Wandpanele 400) zu verriegeln, so dass ein Herausklappen verhindert wird. Beispielsweise kann es sich bei den Verriegelungsmechanismen 330 um Stiftverriegelungen handeln, bei denen Verriegelungsstifte über einen Schieber 331 (Fig. 8) in entsprechende Verriegelungsschlösser, wie in den Fig. 7 und 8 dargestellt, eingeschoben werden können. Es sind jedoch auch andere Mechanismen denkbar, wie beispielsweise einrastende Haken, die in ein Schloss gedreht werden können.

In diesem Beispiel wird die Öffnung 101, in der das Klapppanel 310 angebracht ist, durch drei Gerüststreben, eine vertikale Gerüststrebe 110 und zwei horizontale Gerüststreben 120 definiert. An einer Gangseite der Leichtbauwand 1000 wird die Öffnung 101 also nicht durch eine Gerüststrebe 110 abgeschlossen, so dass das vollständige Öffnen der Klappenvorrichtung 300 eine Verbreiterung eines Gangs mindestens über die Höhe der Klappenvorrichtung 300, beispielsweise in einem Flugzeug, ermöglicht. Sowohl das Klapppanel 310 als auch die umgebenden Wandpanele 400 sind in diesem Beispiel in Leichtbauweise als Sandwichstruktur, wie weiter oben beschrieben, ausgeführt.

Fig. 8 zeigt die Klappenvorrichtung aus Fig. 7 in einer vollständig geöffneten Position. In dieser Position kann das Klapppanel 310 im Wesentlichen parallel vor dem Rest der Leichtbauwand 1000 an den Schwenkmechanismen 320 herunterhängen. Beispielsweise kann das Klapppanel 310 wegen der Viergelenke 330, wie dargestellt, vor einem (eingeklappten) Klappsitz 200 herunterhängen. In dieser Figur sind auch die Schieber 331 der Verriegelungsmechanismen 330 sichtbar. Durch die Schwenkmechanismen 320 muss das Klapppanel 310 nicht aus der Leichtbauwand 1000 entfernt werden, wenn ein breiterer Durchgang benötigt wird. Ein Verlust des Klapppanels 310 ist so nicht möglich.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### BEZUGSZEICHENLISTE

- 100: Wandgerüst
- 101: Öffnung
- 110: vertikale Gerüststreben
- 111: erstes Ende einer vertikalen Gerüststrebe
- 112: zweites Ende einer vertikalen Gerüststrebe
- 120: horizontale Gerüststreben
- 121: erstes Ende einer horizontalen Gerüststrebe
- 122: zweites Ende einer horizontalen Gerüststrebe
- 130: Tragstrukturstreben
- 131: erstes Ende einer Tragstrukturstrebe
- 132: zweites Ende einer Tragstrukturstrebe
- 140: Verbindungsstücke
- 141: erste Halbschale
- 142: zweite Halbschale
- 143: Montagepunkte
- 144: Verbindungslinie
- 145: Anschlussstellen
- 200: Klappsitz
- 210: Sitzelement
- 220: Rückenlehne
- 221: obere Rückenlehnenführung
- 222: Führungsstifte
- 223: Führungsschiene
- 230: Gurtaufrollhalter
- 231: Gurtaufroller
- 232: Gurt
- 240: Rückstellvorrichtung
- 241: Drehachse
- 242: Topf
- 243: Torsionsfeder
- 244: Rotationsachse
- 245: Befestigungsbolzen
- 246: Vorspannhilfe
- 300: Klappenvorrichtung
- 310: Klapppanel
- 320: Schwenkmechanismus
- 330: Verriegelungsmechanismus
- 331: Schieber
- 400: Wandpanel
- 1000: Leichtbauwand

## Patentansprüche

1. Leichtbauwand (1000) für ein Fahrzeug, umfassend:
ein Wandpanel (400);
eine Vielzahl von Gerüststreben (110, 120), wobei jede Gerüststrebe (110, 120) ein erstes Ende (111, 121) und ein zweites Ende (112, 122) aufweist;
eine Vielzahl von Verbindungsstücken (140), wobei jedes Verbindungsstück (140) mindestens zwei Anschlussstellen (145) aufweist; und
eine Tragstrukturstrebe (130);
wobei das erste Ende (111, 121) einer ersten Gerüststrebe (110, 120) mit einer Anschlussstelle (145) eines ersten Verbindungsstücks (140) verbunden ist;
wobei das zweite Ende (112, 122) der ersten Gerüststrebe (110, 120) mit einer Anschlussstelle (145) eines zweiten Verbindungsstücks (140) verbunden ist;
wobei die Gerüststreben (110, 120) zusammen mit den Verbindungsstücken (140) ein Wandgerüst (100) bilden, wobei die Verbindungsstücke (140) Knotenpunkten des Wandgerüsts (100) entsprechen;
wobei das Wandpanel (400) in einer durch die Gerüststreben (110, 120) definierten Öffnung (101) des Wandgerüsts (100) angeordnet ist;
wobei ein erstes Ende (131) der Tragstrukturstrebe (130) an einer weiteren Anschlussstelle (145) des ersten oder des zweiten Verbindungsstücks (140) befestigt ist;
wobei ein zweites Ende (132) der Tragstrukturstrebe (130) konfiguriert ist, mit einer umgebenden Struktur verbunden zu werden;
**dadurch gekennzeichnet, dass**
die Leichtbauwand (1000) ferner eine Klappenvorrichtung (300) umfasst,
und die Klappenvorrichtung aufweist:
ein Klapppanel (310);
einen Schwenkmechanismus (320); und
einen Verriegelungsmechanismus (330);
wobei das Klapppanel (310) sich in einer geschlossenen Position in einer durch die Gerüststreben (110, 120) definierten Öffnung (101) befindet;
wobei der Verriegelungsmechanismus (330) das Klapppanel (310) in der geschlossenen Position lösbar mit einer umgebenden Struktur verbindet;
wobei der Schwenkmechanismus (320) das Klapppanel (310) an einer Unterseite mit einer horizontalen Gerüststrebe (120) der Vielzahl von Gerüststreben (110, 120) schwenkbar verbindet;
wobei der Schwenkmechanismus (320) konfiguriert ist, um dem Klapppanel (310) ein Aufschwenken in eine offene Position zu ermöglichen;
wobei der Schwenkmechanismus (320) ein Viergelenk beinhaltet;
wobei das Viergelenk mit einer ersten Seite an einer horizontalen Gerüststrebe (120) der Vielzahl von Gerüststreben (110, 120) befestigt ist;
wobei das Viergelenk mit einer zweiten Seite an dem Klapppanel (310) befestigt ist; und
wobei das Viergelenk ein gleichzeitiges Schwenken um zwei Drehachsen, die parallel zueinander verlaufen, ermöglicht.

2. Leichtbauwand (1000) nach Anspruch 1, ferner aufweisend einen Klappsitz (200), wobei der Klappsitz (200) beinhaltet:
ein Sitzelement (210); und
eine Rückenlehne (220);
wobei das Sitzelement (210) sich in einem eingeklappten Zustand parallel vor der Rückenlehne (220) befindet;
wobei das Sitzelement (210) in einem ausgeklappten Zustand quer zu der Rückenlehne (220) verläuft, um dadurch einen Sitz zu bilden;
wobei die Rückenlehne (220) über eine obere Rückenlehnenführung (221) an mindestens einer der Vielzahl von Gerüststreben (110) so befestigt ist, dass die Rückenlehne (220) sich in dem eingeklappten Zustand in einer durch die Gerüststreben (110, 120) definierten Öffnung (101) befindet;
wobei das Sitzelement (210) entlang einer Drehachse (241) drehbar gelagert ist; und
wobei das Sitzelement (210) mit der Rückenlehne (220) drehbar so verbunden ist, dass das Sitzelement (210), beim Ausklappen in die ausgeklappte Position, die Rückenlehne (220) in eine in Bezug auf das Wandgerüst (100) geneigte Position aus der Leichtbauwand (1000) herausführt.

3. Leichtbauwand (1000) für ein Fahrzeug, umfassend:
ein Wandpanel (400);
eine Vielzahl von Gerüststreben (110, 120), wobei jede Gerüststrebe (110, 120) ein erstes Ende (111, 121) und ein zweites Ende (112, 122) aufweist;
eine Vielzahl von Verbindungsstücken (140), wobei jedes Verbindungsstück (140) mindestens zwei Anschlussstellen (145) aufweist; und
eine Tragstrukturstrebe (130);
wobei das erste Ende (111, 121) einer ersten Gerüststrebe (110, 120) mit einer Anschlussstelle (145) eines ersten Verbindungsstücks (140) verbunden ist;
wobei das zweite Ende (112, 122) der ersten Gerüststrebe (110, 120) mit einer Anschlussstelle (145) eines zweiten Verbindungsstücks (140) verbunden ist;
wobei die Gerüststreben (110, 120) zusammen mit den Verbindungsstücken (140) ein Wandgerüst (100) bilden, wobei die Verbindungsstücke (140) Knotenpunkten des Wandgerüsts (100) entsprechen;
wobei das Wandpanel (400) in einer durch die Gerüststreben (110, 120) definierten Öffnung (101) des Wandgerüsts (100) angeordnet ist;
wobei ein erstes Ende (131) der Tragstrukturstrebe (130) an einer weiteren Anschlussstelle (145) des ersten oder des zweiten Verbindungsstücks (140) befestigt ist;
wobei ein zweites Ende (132) der Tragstrukturstrebe (130) konfiguriert ist, mit einer umgebenden Struktur verbunden zu werden;
**dadurch gekennzeichnet, dass**
die Leichtbauwand (1000) ferner einen Klappsitz (200) aufweist, wobei
der Klappsitz (200) beinhaltet:
ein Sitzelement (210); und
eine Rückenlehne (220);
wobei das Sitzelement (210) sich in einem eingeklappten Zustand parallel vor der Rückenlehne (220) befindet;
wobei das Sitzelement (210) in einem ausgeklappten Zustand quer zu der Rückenlehne (220) verläuft, um dadurch einen Sitz zu bilden;
wobei die Rückenlehne (220) über eine obere Rückenlehnenführung (221) an mindestens einer der Vielzahl von Gerüststreben (110) so befestigt ist, dass die Rückenlehne (220) sich in dem eingeklappten Zustand in einer durch die Gerüststreben (110, 120) definierten Öffnung (101) befindet;
wobei das Sitzelement (210) entlang einer Drehachse (241) drehbar gelagert ist; und
wobei das Sitzelement (210) mit der Rückenlehne (220) drehbar so verbunden ist, dass das Sitzelement (210), beim Ausklappen in die ausgeklappte Position, die Rückenlehne (220) in eine in Bezug auf das Wandgerüst (100) geneigte Position aus der Leichtbauwand (1000) herausführt.

4. Leichtbauwand (1000) nach einem der vorstehenden Ansprüche, wobei die Verbindungsstücke (140) aus einer ersten Halbschale (141) und einer zweiten Halbschale (142) gebildet sind, die entlang einer Verbindungslinie (144) miteinander verbunden sind.

5. Leichtbauwand (1000) nach einem der vorstehenden Ansprüche, wobei die Verbindungsstücke (140) ferner Montagepunkte (143) aufweisen, die konfiguriert sind, an der Leichtbauwand (1000) zu befestigende Gegenstände aufzunehmen.

6. Leichtbauwand (1000) nach einem der Ansprüche 2 bis 5, wobei die Rückenlehne (220) an seitlichen Rändern Führungsstifte (222) aufweist, die mit Führungsschienen (223) der Rückenlehnenführung (221) gleitend verbunden sind; wobei die Führungsschienen (223) ausgeführt sind, um die Rückenlehne (220) über die Führungsstifte (222) kontinuierlich nach unten und aus der durch das Wandgerüst (100) definierten Ebene heraus zu führen, wenn der Klappsitz (200) in die ausgeklappte Position gebracht wird.

7. Leichtbauwand (1000) nach einem der Ansprüche 2 bis 6, wobei der Klappsitz (200) ferner eine Rückstellvorrichtung (240) und eine untere Gurtanbindung aufweist;
wobei die Rückstellvorrichtung (240) in der Drehachse (241) angeordnet ist;
wobei die Rückstellvorrichtung (240) konfiguriert ist, um das Sitzelement (210) von dem ausgeklappten Zustand in den eingeklappten Zustand zurück zu bringen, wenn keine externe Kraft auf das Sitzelement (210) wirkt; und
wobei die untere Gurtanbindung in die Rückstellvorrichtung (240) integriert ist.

8. Leichtbauwand (1000) nach Anspruch 7, wobei die Rückstellvorrichtung (241) eine Torsionsfeder ist;
wobei die Torsionsfeder an einer ersten Seite der Drehachse (241) fest mit dem Wandgerüst (100) verbunden ist;
wobei die Torsionsfeder an einer zweiten, der ersten Seite gegenüberliegenden, Seite der Drehachse (241) mit dem Sitzelement (210) verbunden ist, um so beim Ausklappen des Klappsitzes (200) in die ausgeklappte Position eine Spannung aufzunehmen; und
wobei die Torsionsfeder über die aufgenommene Spannung eine Rückstellkraft erzeugt, wenn der Klappsitz (200) sich in dem ausgeklappten Zustand befindet, um so das Sitzelement (210) in den eingeklappten Zustand zurück zu bringen.

9. Leichtbauwand (1000) nach einem der Ansprüche 2 bis 8, ferner aufweisend einen Gurtaufroller (231), wobei der Gurtaufroller (231) in einer über der Rückenlehne (220) angeordneten und quer zu denjenigen Gerüststreben (110), an denen der Klappsitz (200) befestigt ist, verlaufenden Gerüststrebe (120) untergebracht und befestigt sind.

## Claims

1. Lightweight wall (1000) for a vehicle, comprising:
a wall panel (400);
a plurality of scaffolding struts (110, 120), each scaffolding strut (110, 120) having a first end (111, 121) and a second end (112, 122);
a plurality of connectors (140), each connector (140) having at least two joining points (145); and
a support structure strut (130);
wherein the first end (111, 121) of a first scaffolding strut (110, 120) is connected to a joining point (145) of a first connector (140);
wherein the second end (112, 122) of the first scaffolding strut (110, 120) is connected to a joining point (145) of a second connector (140);
wherein the scaffolding struts (110, 120) together with the connectors (140) form a wall scaffolding (100), wherein the connectors (140) correspond to nodal points of the wall scaffolding (100);
wherein the wall panel (400) is arranged in an opening (101) of the wall scaffolding (100) defined by the scaffolding struts (110, 120);
wherein a first end (131) of the support structure strut (130) is attached to a further joining point (145) of the first or the second connector (140);
wherein a second end (132) of the support structure strut (130) is configured to be connected to a surrounding structure;
**characterized in that**
the lightweight wall (1000) further comprises a flap device (300), the flap device having:
a folding panel (310);
a pivot mechanism (320); and
a locking mechanism (330);
wherein the folding panel (310) is located in a closed position in an opening (101) defined by the scaffolding struts (110, 120);
wherein the locking mechanism (330) releasably connects the folding panel (310) to a surrounding structure in the closed position;
wherein the pivot mechanism (320) pivotally connects the folding panel (310) at an underside to a horizontal scaffolding strut (120) of the plurality of scaffolding struts (110, 120);
wherein the pivot mechanism (320) is configured to allow the folding panel (310) to pivot open to an open position;
wherein the pivot mechanism (320) comprises a four-bar linkage;
wherein the four-bar linkage is attached with a first side to a horizontal scaffolding strut (120) of the plurality of scaffolding struts (110, 120);
wherein the four-bar linkage is attached with a second side to the folding panel (310); and
whereby the four-bar linkage enables simultaneous pivoting about two axes of rotation that run parallel to each other.

2. Lightweight wall (1000) according to claim 1, further having a folding seat (200), wherein the folding seat (200) includes:
a seat element (210); and
a backrest (220);
wherein the seat element (210) is located parallel in front of the backrest (220) in a folded state;
wherein the seat element (210) extends transversely to the backrest (220) in an unfolded state, thereby forming a seat;
wherein the backrest (220) is attached via an upper backrest guide (221) to at least one of the plurality of scaffolding struts (110) such that the backrest (220) is located in an opening (101) defined by the scaffolding struts (110, 120) in the folded state;
wherein the seat element (210) is rotatably mounted along an axis of rotation (241); and
wherein the seat element (210) is rotatably connected to the backrest (220) in such a way that the seat element (210), when folded out into the unfolded position, guides the backrest (220) out of the lightweight wall (1000) into a position inclined with respect to the wall frame (100).

3. Lightweight wall (1000) for a vehicle, comprising:
a wall panel (400);
a plurality of scaffolding struts (110, 120), each scaffolding strut (110, 120) having a first end (111, 121) and a second end (112, 122);
a plurality of connectors (140), each connector (140) having at least two joining points (145); and
a support structure strut (130);
wherein the first end (111, 121) of a first scaffolding strut (110, 120) is connected to a joining point (145) of a first connector (140);
wherein the second end (112, 122) of the first scaffolding strut (110, 120) is connected to a joining point (145) of a second connector (140);
wherein the scaffolding struts (110, 120) together with the connectors (140) form a wall scaffolding (100), wherein the connectors (140) correspond to nodal points of the wall scaffolding (100);
wherein the wall panel (400) is arranged in an opening (101) of the wall scaffolding (100) defined by the scaffolding struts (110, 120);
wherein a first end (131) of the support structure strut (130) is attached to a further joining point (145) of the first or the second connector (140);
wherein a second end (132) of the support structure strut (130) is configured to be connected to a surrounding structure;
**characterized in that**
the lightweight wall (1000) further having a folding seat (200), wherein the folding seat (200) includes:
a seat element (210); and
a backrest (220);
wherein the seat element (210) is located parallel in front of the backrest (220) in a folded state;
wherein the seat element (210) extends transversely to the backrest (220) in an unfolded state, thereby forming a seat;
wherein the backrest (220) is attached via an upper backrest guide (221) to at least one of the plurality of scaffolding struts (110) such that the backrest (220) is located in an opening (101) defined by the scaffolding struts (110, 120) in the folded state;
wherein the seat element (210) is rotatably mounted along an axis of rotation (241); and
wherein the seat element (210) is rotatably connected to the backrest (220) in such a way that the seat element (210), when folded out into the unfolded position, guides the backrest (220) out of the lightweight wall (1000) into a position inclined with respect to the wall frame (100).

4. Lightweight wall (1000) according to one of the preceding claims, wherein the connectors (140) are formed from a first half-shell (141) and a second half-shell (142), which are connected to each other along a connecting line (144).

5. Lightweight wall (1000) according to one of the preceding claims, wherein the connectors (140) further have mounting points (143) configured to receive objects to be attached to the lightweight wall (1000).

6. Lightweight wall (1000) according to one of the claims 2 to 5, wherein the backrest (220) has guide pins (222) at lateral edges, which are slidingly connected to guide rails (223) of the backrest guide (221);
wherein the guide rails (223) are designed to guide the backrest (220) continuously downwards and out of the plane defined by the wall frame (100) via the guide pins (222) when the folding seat (200) is brought into the unfolded position.

7. Lightweight wall (1000) according to one of the claims 2 to 6, wherein the folding seat (200) further has a resetting device (240) and a lower belt connection;
wherein the resetting device (240) is arranged in the axis of rotation (241);
wherein the resetting device (240) is configured to return the seat element (210) from the unfolded state to the folded state when no external force is applied to the seat element (210); and
wherein the lower belt connection is integrated into the resetting device (240).

8. Lightweight wall (1000) according to claim 7, wherein the resetting device (241) is a torsion spring;
wherein the torsion spring is firmly connected to the wall frame (100) on a first side of the axis of rotation (241);
wherein the torsion spring is connected to the seat element (210) on a second side of the axis of rotation (241) opposite the first side, so as to absorb a tension when the folding seat (200) is folded out into the unfolded position; and
wherein the torsion spring generates a resetting force via the absorbed tension when the folding seat (200) is in the folded-out state in order to return the seat element (210) to the folded-in state.

9. Lightweight wall (1000) according to one of the claims 2 to 8, further having a belt retractor (231), wherein the belt retractor (231) is accommodated in and attached to a scaffolding strut (120) arranged above the backrest (220) and extending transversely to those scaffolding struts (110) to which the folding seat (200) is attached.

## Revendications

1. Cloison légère (1000) pour un véhicule, comprenant
un panneau de cloison (400);
une pluralité de montants d'échafaudage (110, 120), dans laquelle chaque montant d'échafaudage (110, 120) comprend une première extrémité (111, 121) et une deuxième extrémité (112, 122);
une pluralité de connecteurs (140), dans laquelle chaque connecteur (140) comprend au moins deux points de raccordement (145); et
une entretoise de structure porteuse (130);
dans lequel la première extrémité (111, 121) d'un premier montant d'échafaudage (110, 120) étant connectée connectée à un point de raccordement (145) d'une première connecteur (140);
dans lequel la deuxième extrémité (112, 122) du premier montant d'échafaudage (110, 120) est connectée à un point de raccordement (145) d'une deuxième connecteur (140);
dans lequel les montants d'échafaudage (110, 120) forment ensemble avec les connecteurs (140) un ossature de cloison (100), dans lequel les connecteurs (140) correspondant à des points de jonction de l'ossature de cloison (100);
dans lequel le panneau de cloison (400) est disposé dans une ouverture (101) de l'ossature de cloison (100) définie par les montants d'échafaudage (110, 120);
dans lequel une première extrémité (131) de l'entretoise de structure porteuse (130) est fixée à un autre point de raccordement (145) de la première ou de la deuxième connecteur (140);
dans lequel une seconde extrémité (132) de l'entretoise de structure porteuse (130) est configurée pour être connectée à une structure environnante;
**caractérisé en ce que**
la cloison légère (1000) comprend en outre un dispositif de volet (300), et le dispositif de volet comprend :
un panneau rabattable (310);
un mécanisme de pivotement (320); et
un mécanisme de verrouillage (330);
dans lequel le panneau rabattable (310) se trouve dans une position fermée dans une ouverture (101) définie par les montants d'échafaudage (110, 120);
dans lequel le mécanisme de verrouillage (330) connecte de manière libérable le panneau rabattable (310) à une structure environnante dans la position fermée;
dans lequel le mécanisme de pivotement (320) connecte de manière pivotante le panneau rabattable (310) sur un côté inférieur à un montant d'échafaudage horizontal (120) de la pluralité de montants d'échafaudage (110, 120);
dans lequel le mécanisme de pivotement (320) est configuré pour permettre au panneau rabattable (310) de pivoter vers le haut jusqu'à une position ouverte;
dans lequel le mécanisme de pivotement (320) comprend un quadrilatère articulé;
dans lequel le quadrilatère articulé est fixé par un premier côté à un montant d'échafaudage horizontal (120) de la pluralité de montants d'échafaudage (110, 120);
dans lequel le quadrilatère articulé étant fixé par un second côté au panneau rabattable (310); et
dans lequel le quadrilatère articulé permettant un pivotement simultané autour de deux axes de rotation qui sont parallèles entre eux.

2. Cloison légère (1000) selon la revendication 1, comprenant en outre un siège rabattable (200), dans laquelle le siège rabattable (200) comprend :
un élément de siège (210); et
un dossier (220);
dans lequel l'élément de siège (210) se trouve parallèlement devant le dossier (220) dans un état rabattu;
dans lequel l'élément de siège (210) s'étend transversalement au dossier (220) dans un état déployé pour former ainsi un siège;
dans lequel le dossier (220) est fixé à au moins l'une de la pluralité de montants d'échafaudage (110) par l'intermédiaire d'un guide de dossier supérieur (221) de telle sorte que le dossier (220) se trouve dans l'état rabattu dans une ouverture (101) définie par les de montants d'échafaudage (110, 120);
dans lequel l'élément de siège (210) est supporté de manière rotative le long d'un axe de rotation (241); et
dans lequel l'élément de siège (210) est connecté de manière rotative au dossier (220) de telle sorte que, lorsqu'il est déployé dans la position déployée, l'élément de siège (210) guide le dossier (220) vers l'extérieur de la cloison légère (1000) dans une position inclinée par rapport à l'ossature de cloison (100).

3. Cloison légère (1000) pour un véhicule, comprenant :
un panneau de cloison (400);
une pluralité de montants d'échafaudage (110, 120), dans laquelle chaque montant d'échafaudage (110, 120) comprend une première extrémité (111, 121) et une deuxième extrémité (112, 122);
une pluralité de connecteurs (140), dans laquelle chaque connecteur (140) comprend au moins deux points de raccordement (145); et
une entretoise de structure porteuse (130);
dans lequel la première extrémité (111, 121) d'un premier montant d'échafaudage (110, 120) étant connectée à un point de raccordement (145) d'une première connecteur (140);
dans lequel la deuxième extrémité (112, 122) du premier montant d'échafaudage (110, 120) est connectée à un point de raccordement (145) d'une deuxième connecteur (140);
dans lequel les montants d'échafaudage (110, 120) forment ensemble avec les connecteurs (140) un ossature de cloison (100), dans lequel les connecteurs (140) correspondant à des points de jonction de l'ossature de cloison (100);
dans lequel le panneau de cloison (400) est disposé dans une ouverture (101) de l'ossature de cloison (100) définie par les montants d'échafaudage (110, 120);
dans lequel une première extrémité (131) de l'entretoise de structure porteuse (130) est fixée à un autre point de raccordement (145) de la première ou de la deuxième connecteur (140);
dans lequel une seconde extrémité (132) de l'entretoise de structure porteuse (130) est configurée pour être connectée à une structure environnante;
**caractérisé en ce que**
la cloison légère (1000) comprend en outre un siège rabattable (200), le siège rabattable (200) comprenant :
un élément de siège (210); et
un dossier (220);
dans lequel l'élément de siège (210) se trouve parallèlement devant le dossier (220) dans un état rabattu;
dans lequel l'élément de siège (210) s'étend transversalement au dossier (220) dans un état déployé pour former ainsi un siège;
dans lequel le dossier (220) est fixé à au moins l'une de la pluralité de montants d'échafaudage (110) par l'intermédiaire d'un guide de dossier supérieur (221) de telle sorte que le dossier (220) se trouve dans l'état rabattu dans une ouverture (101) définie par les de montants d'échafaudage (110, 120);
dans lequel l'élément de siège (210) est supporté de manière rotative le long d'un axe de rotation (241); et
dans lequel l'élément de siège (210) est connecté de manière rotative au dossier (220) de telle sorte que, lorsqu'il est déployé dans la position déployée, l'élément de siège (210) guide le dossier (220) vers l'extérieur de la cloison légère (1000) dans une position inclinée par rapport à l'ossature de cloison (100).

4. Cloison légère (1000) selon l'une quelconque des revendications précédentes, dans laquelle les connecteurs (140) sont formées d'une première demi-coque (141) et d'une seconde demi-coque (142) connectées entre elles le long d'une ligne de liaison (144).

5. Cloison légère (1000) selon l'une quelconque des revendications précédentes, dans laquelle les connecteurs (140) comprennent en outre des points de montage (143) configurés pour recevoir des objets à fixer sur la cloison légère (1000).

6. Cloison légère (1000) selon l'une quelconque des revendications 2 à 5, dans laquelle le dossier (220) comporte, sur des bords latéraux, des broches de guidage (222) qui sont connectées de manière coulissante à des rails de guidage (223) du guide de dossier supérieur (221);
dans lequel les rails de guidage (223) sont adaptés pour guider le dossier (220) de manière continue vers le bas et hors du plan défini par l'ossature de cloison (100) par l'intermédiaire des broches de guidage (222) lorsque le siège rabattable (200) est amené dans la position déployée.

7. Cloison légère (1000) selon l'une quelconque des revendications 2 à 6, dans laquelle le siège rabattable (200) comprend en outre un dispositif de rappel (240) et une attache de ceinture inférieure;
dans lequel le dispositif de rappel (240) est disposé dans l'axe de rotation (241);
dans lequel le dispositif de rappel (240) est configuré pour ramener l'élément de siège (210) de l'état déployé à l'état rabattu lorsqu'aucune force externe n'est appliquée à l'élément de siège (210); et
dans lequel l'attache de ceinture iinférieure est intégrée dans le dispositif de rappel (240).

8. Cloison légère (1000) selon la revendication 7, dans laquelle le dispositif de rappel (241) est un ressort de torsion;
dans lequel le ressort de torsion est connecté de manière fixe à l'ossature de cloison (100) sur un premier côté de l'axe de rotation (241);
dans lequel le ressort de torsion est connecté à l'élément de siège (210) sur un second côté de l'axe de rotation (241) opposé au premier côté, de manière à absorber une tension lorsque le siège rabattable (200) est déployé dans la position déployée; et
dans lequel le ressort de torsion génère une force de rappel par l'intermédiaire de la tension absorbée lorsque le siège rabattable (200) se trouve dans l'état déployé, de manière à ramener l'élément de siège (210) dans l'état rabattu.

9. Cloison légère (1000) selon l'une quelconque des revendications 2 à 8, comprenant en outre un enrouleur de ceinture (231), l'enrouleur de ceinture (231) étant logé et fixé dans un montant d'échafaudage (120) disposé au-dessus du dossier (220) et s'étendant transversalement à ceux des montants d'échafaudage (110) auxquels le siège rabattable (200) est fixé.
